# EUROPEAN PATENT APPLICATION

(11) **EP 4 718 814 A1**
(43) Date of publication of application: **01.04.2026**
(21) Application number: 25204388.0
(22) Date of filing: 24.09.2025
(51) Int. Cl.: H04L 49/20, H04L 12/46, H04L 43/02

(54) **REMOTE SWITCH PORT MIRRORING IN A NETWORK**

(30) Priority: 30.09.2024 US 202418902787
(71) Applicant: Avago Technologies International Sales Pte. Limited, Singapore 768923 (SG)
(72) Inventor: Arunarthi, Venkat, San Jose, 95135 (US); Choudhury, Abhijit Kumar, Cupertino, 95014 (US); Kwentus, Alan Y., Coto de Caza, 92679 (US); Wolfson, Bruce Howard, Trabuco Canyon, 92679 (US); Chalasani, Shadgun Kumar, Fremont, 94555 (US); Lan, Hung-Ying, Sunnyvale, 94087 (US)
(74) Representative: Dilg, Haeusler, Schindelmann Patentanwaltsgesellschaft mbH

(57) **Abstract**

An example network switch includes: a hardware platform; a first switch port, supported by the hardware platform, configured to receive first network traffic for a network; and switch logic, supported by the hardware platform, configured to copy the first network traffic received by the first switch port to generate mirrored traffic for a second switch port in the network, the switch logic further configured to embed metadata into the mirrored traffic, the metadata including information extrinsic to the first network traffic, the switch logic further configured to send the mirrored traffic to a device connected to the second switch port.

## Description

### BACKGROUND

A computer network (also referred to herein as a network) may be devices connected by network nodes for communication with one another. The devices can range from computing devices (e.g., personal computers, smartphones, wearables, etc.) to household devices (e.g., appliances, doorbells, thermostats, etc.) to devices in an automobile or other type of vehicle, among others. A network node may be a connection point in the network. Example network nodes include network switches, network hubs, network bridges, network routers, wireless access points, and the like. The scope of a network can differ depending on context. For example, a network can be devices connected to a single network switch. Thus, a network switch (also referred to as a switch) may be a network node that connects devices to create a network. A network can be devices connected to multiple switches. A network can be devices connected to one or more switches and a network router. A network router (also referred to as a router) may be a network node that can connect multiple switches and hence form a larger network. A network can be devices and network nodes disposed at a location, which can be referred to as a local area network (LAN). A network can be multiple connected LANs, which can be referred to as a wide area network (WAN). The public Internet is an example of a WAN. As used herein, the term network can have any scope unless otherwise confined, such as by location, by type, by a set of network nodes, etc.

Communication between devices on a network can be organized into layers, such as the layers defined by the well-known Open Systems Interconnection (OSI) model. The physical layer (also known as layer 1) may be the layer that provides an electrical, mechanical, and procedural interface to the transmission medium. The transmission medium may be the physical pathways through which data can be transmitted. The transmission medium can be wireline (e.g., twisted pair cable, coaxial cable, optical fiber cable, etc.), wireless, or a combination thereof. The data link layer (also known as layer 2) may be the layer that transfers data between network nodes using addresses for device identification while ensuring reliable transmission across the transmission medium. Ethernet is a widely used and well-known networking technology that implements the data link layer in a network. The network layer (also known as layer 3) may be the layer responsible for determining how data is transmitted between devices across different networks. Internet Protocol (IP) is a widely used and well-known networking technology that implements the network layer in a network. A primary role of the network layer is routing, which may be the process that ensures data is sent to the correct destination even when passing through multiple networks.

A network can include a device configured to monitor network traffic. An example of such a device is an intrusion detection system, which can monitor a network for malicious activity or policy violations. Another example is a network analyzer, which can analyze network traffic for purposes such as solving communication problems, planning network capacity, performing network optimization, etc. Network traffic may be a quantum of packets moving in a network over a given time. A packet may be a unit of data transmitted over a network. A packet can have different connotations depending on the layer. Packets of one layer can be encapsulated in packets of another layer. For example, a frame may be a packet of the data link layer. Frames can encapsulate packets of the network layer (e.g., IP packets). For purposes of clarity by example, the description herein uses the term frame with respect to packets of the data link layer and IP packet with respect to packets at the network layer. The term packet can be used generically to refer to frames, IP packets, or any other units defined at different layers.

A network switch can include switch ports. A switch port (also referred to herein as a port) may be a point of ingress to a switch (e.g., network traffic into the switch), egress from a switch (e.g., network traffic out of the switch), or both. Switch port mirroring (also referred to as port mirroring) may be a process where network traffic seen by port(s) in a network is copied to another port in the network. "Another port in the network" can be either a port of the same switch or a port of another switch. Port mirroring can be used to send a copy of network traffic (referred to herein as mirrored traffic) to a device configured to monitor network traffic. Switches can include port mirroring functions to perform port mirroring in a network. A port mirroring function can have different names depending on the manufacturer of the switch. For example, a switch port analyzer (SPAN) is a name widely used by some switch manufacturers. In one type of port mirroring, the network traffic can be copied from port(s) in a switch (referred to herein as mirrored port(s)) to another port in the same switch (referred to herein as the probe port). Such a type of port mirroring can be referred to as local switch port mirroring (also referred to herein as local port mirroring). Some manufacturers refer to a local port mirroring function as local SPAN (LSPAN). In another type of port mirroring, the network traffic can be copied from port(s) in a first switch to another port in a second switch. Such a type of port mirroring can be referred to as remote switch port mirroring (also referred to as remote port mirroring). Some manufacturers refer to a remote port mirroring function as remote SPAN or Remote Switch Port Analyzer (RSPAN).

Remote port mirroring can allow monitoring of network traffic from ports distributed over multiple switches in a network. The probe port can be located at any one of the multiple switches. Remote port mirroring can send mirrored network traffic to the probe port over a virtual local area network (VLAN) dedicated for such purpose. A VLAN may be a logical grouping of devices and/or nodes within a network. VLANs can be implemented by assigning specific ports to specific VLANs. This can create a virtual separation of network traffic between devices connected to ports assigned to one specific VLAN and devices connected to other ports not assigned to the specific VLAN. Network traffic can be tagged to identify that the traffic belongs to a specific VLAN. VLAN tagging may be insertion of VLAN identifier(s) into headers of packets in the network traffic.

Port mirroring can suffer from some problems. One problem can result from a remote port mirroring function replacing an original VLAN tag in the packets of the traffic being copied with the VLAN tag of the VLAN dedicated to remote port mirroring. In such case, the monitoring device cannot know the original VLAN, since that information was lost in the remote port mirroring process. Another problem for both local and remote mirroring can be the inability for the monitoring device to distinguish between multiple ports being mirrored since the mirrored traffic is aggregated.

### SUMMARY

In an embodiment, a network switch is described. The network switch can include a hardware platform and a first switch port, supported by the hardware platform, configured to receive first network traffic for a network. The network switch can include switch logic, supported by the hardware platform, configured to copy the first network traffic received by the first switch port to generate mirrored traffic for a second switch port in the network. The switch logic can be further configured to embed metadata into the mirrored traffic, the metadata including information extrinsic to the first network traffic. The switch logic can be further configured to send the mirrored traffic to a device connected to the second switch port.

In another embodiment, a network switch is described. The network switch can include a hardware platform and a first switch port supported by the hardware platform. The network switch can include switch logic, supported by the hardware platform, configured to receive mirrored traffic on a first virtual local area network (VLAN), the mirrored traffic being a copy of first traffic received by a second switch port of another network switch, the mirrored traffic including metadata embedded therein, the metadata including information extrinsic to the first network traffic. The switch logic can be further configured to send the mirrored traffic to a device connected to the first switch port.

In another embodiment, a method of port mirroring in a network switch is described. The method can include receiving, at a first switch port supported by a hardware platform of the switch, first network traffic for a network. The method can include copying, by switch logic supported by the hardware platform, the first network traffic received by the first switch port to generate mirrored traffic for a second switch port in the network. The method can include embedding, by the switch logic, metadata into the mirrored traffic, the metadata including information extrinsic to the first network traffic. The method can include sending, by the switch logic, the mirrored traffic to a device connected to the second switch port.

### BRIEF DESCRIPTION OF THE DRAWINGS

Fig. 1 is a block diagram depicting a network according to some embodiments.
Fig. 2 is a block diagram depicting a network switch according to some embodiments.
Fig. 3A is a block diagram depicting network switches configured for remote port mirroring according to some embodiments.
Fig. 3B is a block diagram depicting port mirroring sessions for the network switches of Fig. 3A according to some embodiments.
Fig. 4A is a block diagram depicting a frame of a data link layer.
Fig. 4B is a block diagram depicting a frame of a data link layer according to some embodiments.
Fig. 5A is a block diagram depicting a frame of a data link layer.
Fig. 5B is a block diagram depicting a frame of a data link layer according to some embodiments.
Fig. 6 is a block diagram depicting a network configured with remote port mirroring according to some embodiments.
Fig. 7 is a flow diagram depicting a method of configuring remote port mirroring according to some embodiments.
Fig. 8 is a flow diagram depicting a method of remote port mirroring according to some embodiments.
Fig. 9 is a flow diagram depicting a method of local port mirroring according to some embodiments.

### DETAILED DESCRIPTION

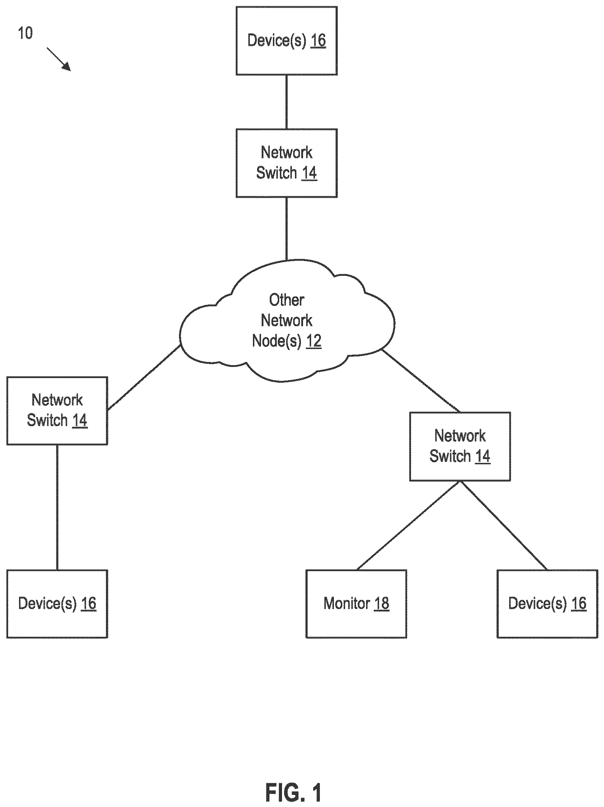

Fig. 1 is a block diagram depicting a network 10 according to some embodiments. Network 10 can include a plurality of network switches 14 (e.g., three are shown). Each network switch 14 can be connected to device(s) 16. Device(s) 16 can be any type of computing device, or other device, with a network interface. A network interface may be a point of connection between a device and a network (e.g., a circuit, such as a network interface controller). Network switches 14 can be coupled to form network 10. In some embodiments, network switches 14 can be coupled to other network node(s) 12 to form network 10. Other network node(s) 12 can include, for example, other network switches, network routers, etc. Network 10 can include a monitor 18. Monitor 18 may be a computing device. A computing device may be a device having circuits for processing data. For example, monitor 18 can be a computing device having a processor, memory, etc. configured to execute software. Monitor 18 can receive network traffic to be processed, such as mirrored traffic from port mirroring. For example, monitor 18 can be an intrusion detection system, network analyzer, or the like. In embodiments, network switches 14 can support port mirroring with metadata, as discussed further below.

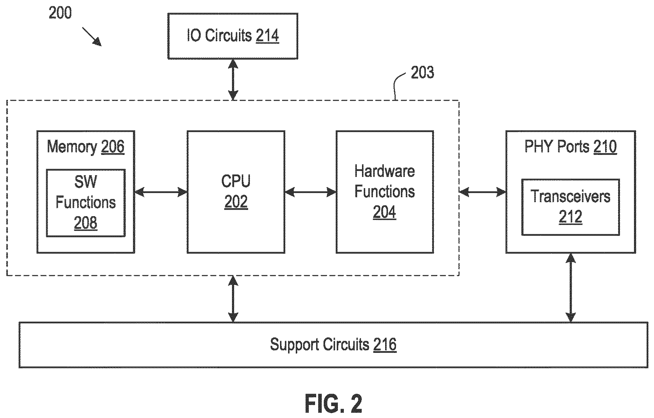

Fig. 2 is a block diagram depicting a network switch 200 according to some embodiments. Each network switch 14 in network 10 can be implemented the same or similar to network switch 200. Network switch 200 can include a hardware platform 203, physical ports 210 (shown as PHY ports 210), input/output (IO) circuits 214, and support circuits 216. A hardware platform may be physical components of an electronic system (sometimes referred to as hardware). Hardware platform 203 can include physical components of network switch 14. In some embodiments, hardware platform 203 includes a central processing unit (CPU) 202, hardware functions 204, and a memory 206. A CPU may be a circuit that can interpret and execute instructions, and manipulate data, of software. Software may be instructions and data used to operate a computing device. A memory may be a circuit or circuits that store information. Memory 206 can include volatile memory, non-volatile memory, or a combination thereof. Volatile memory may be any type of memory circuit that requires power to maintain the stored information (e.g., RAM 24). Non-volatile memory may be any type of memory circuit that retains data even when the power is turned off or disconnected (e.g., read-only memory (ROM), erasable programmable ROM (EPROM), FLASH memory, etc.).

CPU 202 can execute software stored in memory 206. The software can include software functions 208. Hardware functions may be any type of operations of a device performed using circuits. Software functions may be any type of operations of a device performed using software. Hardware functions 204 can be operations of network device 200. CPU 202 can be coupled to hardware functions 204 for control thereof. Software functions 208 can be operations of network device 200. CPU 202 can be coupled to memory 206 to execute software functions 208.

Physical ports 210 may be circuits that provide a point of ingress and/or egress for network switch 200. Each physical port 210 can include a transceiver 212. A transceiver may be a circuit that can transmit and receive signals. Transceivers 212 can transmit and receive signals from a transmission medium of a network. Physical ports 210 can be supported by hardware platform 203. A component can be supported by hardware platform 203 by being controlled by hardware platform 203, by exchanging data with hardware platform 203, implemented by hardware platform 203, or any combination. Hardware platform 203 can control physical ports 210 (e.g., control configurable settings of physical ports 210). Hardware platform 203 and physical ports 210 can exchange data.

IO circuits may be circuits that facilitate receiving input data and sending output data. IO circuits 214 can receive input data for, and send output data from, hardware platform 203. IO circuits 214 can include circuits other than physical ports 210. Support circuits may be circuits that support hardware of a device. Support circuits 216 can support hardware platform 203 and physical ports 210. Support circuits 216 can include power supplies, circuit boards, backplanes, etc.

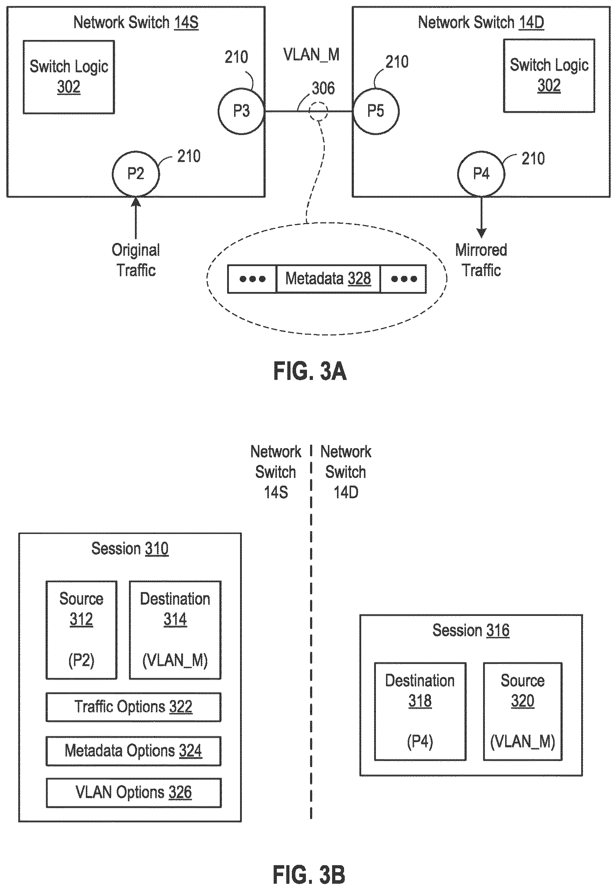

Fig. 3A is a block diagram depicting network switches configured for remote port mirroring with metadata according to some embodiments. For example, a subset of network 10 can include a network switch 14S and a network switch 14D. Network switches 14S and 14D can be an arbitrary pair of network switches 14. The designator "S" in the reference character indicates a source of mirrored traffic and the designated "D" in the reference character indicates a destination of mirrored traffic. Each network switch 14S and 14D includes switch logic 302. Switch logic 302 can any logic that performs the operations of a network switch described herein, such as operations related to port mirroring (e.g., local port mirroring and remote port mirroring). Switch logic 302 can be implemented in hardware (e.g., circuits implementing hardware functions 204), hardware executing software (e.g., hardware executing software functions 208), or a combination thereof (e.g., a combination of hardware functions 204 and software functions 208). That is, switch logic may be hardware (e.g., circuitry) that performs functions implemented by circuits of the hardware (hardware functions 204), software executing on the hardware (software functions 208), or a combination thereof. Network switch 14S can include ports P2 and P3 (among other ports not shown). In some embodiments, ports P2 and P3 can be physical ports 210 of network switch 14S. In some embodiments, switch logic 302 can logically group multiple physical ports and treat the group of physical ports as a single port. Thus, in other embodiments, either or both of ports P2 and P3 can be a group of physical ports treated as a single port. Network switch 14D can include ports P4 and P5 (among other ports not shown). Ports P4 and P5 can be physical ports 210. Either or both ports P4 and P5 can be a group of physical ports treated as a single port.

In operation, a user can interact with switch logic 302 to define a VLAN 306 (with VLAN tag VLAN_M). A user may be a person or software (e.g., artificial intelligence (AI) software, software performing automation, etc.). The user can interact with switch logic 302 through a user interface (UI), application programming interface (API), or the like (not shown). The user can access the UI through network 10 or through IO circuits 214. The user can interact with switch logic 302 to designate VLAN 306 as the VLAN to be used with remote port mirroring. The user can interact with switch logic 302 to create sessions for remote port mirroring. A port mirroring session (also referred to as a session) can be a condition of establishing port mirroring. Switch logic 302 can maintain information that defines a session. A session can include a source of the mirrored traffic and a destination for the mirrored traffic. For local port mirroring, a single session can specify a source and a destination for the mirrored traffic. The source of mirrored traffic can be a port or a plurality of ports. Alternatively, the source of mirrored traffic can be a VLAN, which can include all ports that belong to that VLAN. The user can interact with switch logic 302 to define one or more VLANs (other than VLAN 306). The user can interact with switch logic 302 to assign port(s) to each such VLAN. Ports can be added or removed from a VLAN over time. The user can interact with switch logic 302 to specify a source of mirrored traffic as one of such VLANs. The destination of mirrored traffic can be a port. For remote port mirroring, multiple sessions can specify source(s) and a destination for the mirrored traffic. The source(s) and destination can be specified as described above for local port mirroring sessions. However, in remote port mirroring, in case of multiple sources, those multiple sources can be dispersed across multiple network switches. Further, the destination can be in one network switch and source(s) can be in at least one other network switch. A session can also include various options, as discussed further below.

Fig. 3B is a block diagram depicting port mirroring sessions for the network switches of Fig. 3A according to some embodiments. In network switch 14S, the user can interact with switch logic 302 to create a session 310. Session 310 can identify a source 312 of mirrored traffic as port P2. That is, in the example, port P2 is a mirrored port. Session can identify a destination 314 of mirrored traffic as VLAN 306 (VLAN_M). Since the port mirroring session in Figs. 3A-B is a remote port mirroring session, session 310 in network switch 14S (the source switch) includes VLAN 306 as the destination of mirrored traffic rather than a probe port. In network switch 14D, the user can interact with switch logic 302 to create a session 316. Session 316 can identify a source 320 of mirrored traffic as VLAN 306 (VLAN_M). Session 316 can identify a destination 318 of mirrored traffic as port P4. That is, in the example, port P4 is a probe port.

Session 310 can include options, such as traffic options 322, metadata options 324, and VLAN options 326. Traffic options 322 may be options related to the type of traffic to be mirrored. For example, a port can receive ingress traffic (e.g., traffic originating from a device connected to the port), egress traffic (e.g., traffic being sent from the port), or both ingress and egress traffic. Traffic options 322 can specify which type of traffic is to be copied to generate the mirrored traffic (e.g., ingress, egress, or both). In another example, the user can interact with switch logic 302 to define traffic flows. A traffic flow may be traffic where the packets have a common property or properties. Traffic options 322 can specify which traffic flow(s) is/are to be copied to generate the mirrored traffic. Metadata options 324 and VLAN options 326 are described below.

Returning to Fig. 3A, in the example, the user can set up remote port mirroring such that port P2 is the mirrored port (source of mirrored traffic). Original traffic received by port P2 can be mirrored (e.g., ingress traffic in the example). VLAN 306 can be the VLAN designated for remote port mirroring. Port P3 in network switch 14S and port P5 in network switch 14D can be assigned to VLAN 306 (with VLAN tag VLAN_M). Switch logic 302 and switch logic 302 can cooperate to perform the remote port mirroring. Switch logic 302 in network switch 14S can copy the original traffic received by port P2 to generate mirrored traffic and send the mirrored traffic on VLAN 306 via port P3. Switch logic 302 in network switch 14D can receive the mirrored traffic on VLAN 306 via port P5. Switch logic 302 can send the mirrored traffic to a monitor (e.g., monitor 18) connected to port P4.

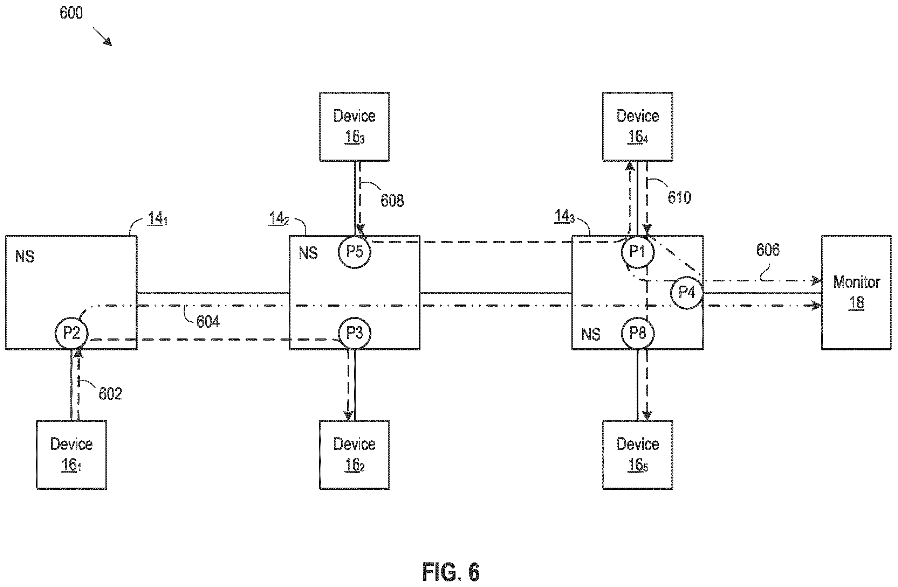

In some embodiments, switch logic 302 can embed metadata 328 in the frames of the mirrored traffic. As used herein, embed may be a process of inserting data (e.g., metadata 328) into packets or frames (e.g., frames of the mirrored traffic). For example, metadata 328 can be embedded into frames of the mirrored traffic by inserting the metadata in a header of each frame. A header of a packet or frame may be a portion of the frame preceding the data of the payload. Metadata may be data or information that describes other data. Metadata 328 can include data that describes aspects of the mirrored traffic. For example, metadata 328 can include information extrinsic to the mirrored traffic. As used herein, the term extrinsic may mean not present in the original frames of the traffic being mirrored. For example, metadata 328 can include identifiers for ports to which the original traffic was destined (e.g., some other port(s) not shown). Metadata 328 can include an identifier of the sources of mirrored traffic (e.g., mirrored port(s)). Metadata 328 can include an identifier of traffic flow(s) in the mirrored traffic. Metadata 328 can include an identifier of the switch(es) having source(s) of mirrored traffic. Metadata 328 can include any combination of such data or any other data maintained by switch logic 302 during operation. Metadata 328 can assist a monitor in processing the mirrored traffic, such as by supplying information that would be lost or otherwise not capable of being derived from the mirrored traffic absent metadata 328. An example use of metadata 328 is described below with respect to Fig. 6. Session 310 can include metadata options 324 that can specify which information to include in metadata 328.

In some embodiments, switch logic 302 can preserve VLAN tags in the original traffic when generating mirrored traffic for remote port mirroring. This is discussed further below. Session 310 can include VLAN options 326 that specify whether to preserve original VLAN tags in the mirrored traffic.

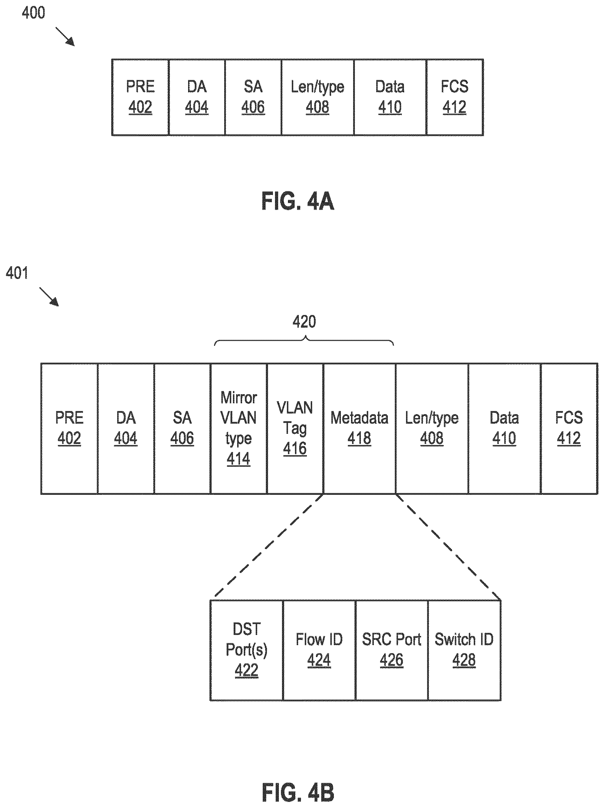

Fig. 4A is a block diagram depicting a frame 400 of a data link layer. Frame 400 can be the type of frame used in Ethernet, for example. Frame 400 can include preamble field 402 (shown as PRE 402), a destination address field 404 (shown as DA 404), a source address field 406 (shown as SA 406), a length/type field 408 (shown as len/type 408), a data field 410, and a frame check sequence (FCS) field 412. A field may be a portion of a packet (e.g., portion of frame 400). A preamble may be predefined data (e.g., a fixed data pattern) at or near the beginning of a packet. Preamble 402 can be the first field in frame 400. A destination address may be an identifier of a destination for the frame. In the context of the data link layer, the destination address can be a media access control (MAC) address. A source address may be an identifier of a source of the frame. In the context of the data link layer, the source address can be a MAC address. Data field 410 can include the payload of frame 400 (e.g., the data being exchanged, such as IP packet(s)). Len/type field 408 can specify the length of the data in data field 410 and/or the type of the data in data field 410. For example, Ethernet defines an EtherType field that can specific EtherType values associated with known protocols. A value of len/type field 408 less than a defined minimum EtherType value can mean the field specifies length. Otherwise, the field can specify an EtherType. FCS field 412 can include an FCS for frame 400. An FCS may be an error-detecting code for a packet. Frames as shown in Fig. 4A can be present in original traffic that is to be copied in port mirroring.

Fig. 4B is a block diagram depicting a frame 401 of a data link layer according to some embodiments. Elements of Fig. 4B that are the same or similar to those of Fig. 4A are designated with identical reference numerals and discussed in detail above. Frame 401 includes additional fields 420 not present in frame 400. Additional fields 420 can include a mirror VLAN type field 414, a VLAN tag field 416, and a metadata field 418. In the example of Fig. 3A, VLAN 306 can be designated as the VLAN for mirrored traffic in remote port mirroring. Such VLAN 306 can be referred to herein as a mirror VLAN. Frame 401 can be a frame modified by switch logic 302 to tag frame 401 with a specified VLAN, in this case, the mirror VLAN. Tagging a frame with a VLAN may be a process of inserting fields in the frame specifying the VLAN. In frame 401, these fields are mirror VLAN type field 414 and VLAN tag 416. Mirror VLAN type field 414 can specify that the frame is tagged with a mirror VLAN. For example, in Ethernet, mirror VLAN type field 414 can be EtherType 0x8100, which indicates a VLAN-tagged frame. VLAN tag 416 can include a value of the VLAN tag for the mirror VLAN (e.g., a value between 1 and 4094). Switch logic 302 can tag frames in mirrored traffic as shown in Fig. 4B.

Metadata field 418 can provide metadata 328 as discussed above. Metadata field 418 can include one or more fields depending on the information in metadata 328. In the example, metadata field 418 can include a destination port field 422 (shown as DST port(s) 422), a flow identifier field 424 (shown as flow ID 424), a source port field 426 (shown as SRC port 426), and a switch identifier field 428 (shown as switch ID 428). Destination port field 422 can include one or more destination ports for the frame in the original traffic. Flow identifier field 424 can include identifier(s) of traffic flow(s) in the original traffic that were mirrored. Source port field 426 can include a source port for the frame in the original traffic. Switch identifier 428 can include an identifier of the network switch that was the source of the frame in the original traffic. Metadata field 418 can include various field configurations depending on the metadata being carried.

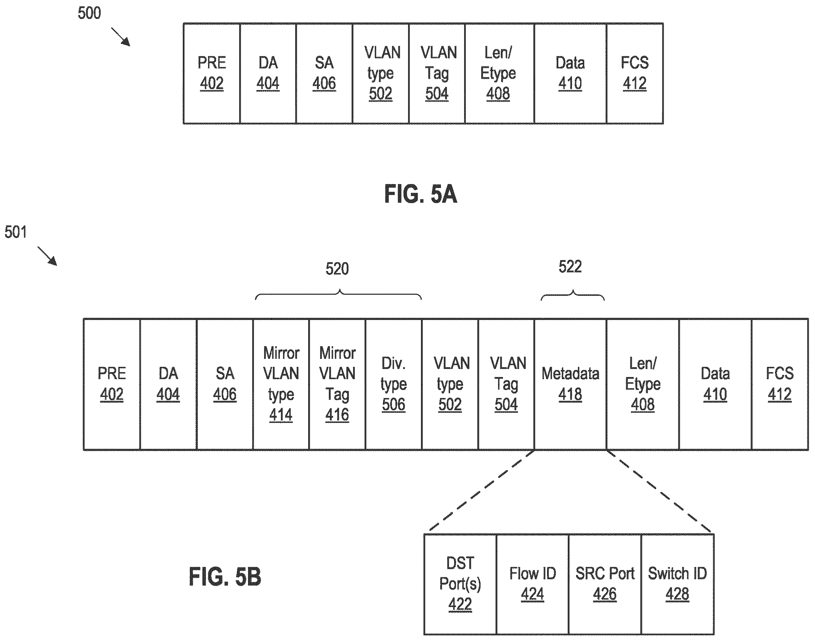

Fig. 5A is a block diagram depicting a frame 500 of a data link layer. Elements of Fig. 5A that are the same or similar to those of Fig. 4A are designated with identical reference numerals and discussed in detail above. Frame 500 differs from frame 400 in that frame 500 is tagged with a user VLAN (e.g., a VLAN other than a mirror VLAN for mirrored traffic in remote port mirroring). Frame 500 can include a user VLAN type field 502 (shown as VLAN type 502) and a user VLAN tag field 504 (shown as VLAN tag 504). User VLAN type field 502 can specify that the frame is tagged with a any VLAN (other than the mirror VLAN). For example, in Ethernet, VLAN type field 502 can be EtherType 0x8100, which indicates a VLAN-tagged frame (sometimes referred to as a C-Tag or customer VLAN). Other EtherTypes are possible. For example, EtherType 0x88A8 is a common EtherType value for S-Tag (service V-LAN tag). Other VLANs in practice can use EtherTypes 0x9100 or 0x9200. VLAN tag 504 can include a value of the VLAN tag for the user VLAN (e.g., a value between 1 and 4094). A user VLAN, as used herein, may be any VLAN other than a mirror VLAN. Frames as shown in Fig. 5A can be present in original traffic that is to be copied in port mirroring.

Fig. 5B is a block diagram depicting a frame 501 of a data link layer according to some embodiments. Elements of Fig. 5B that are the same or similar to those of Fig. 5A are designated with identical reference numerals and discussed in detail above. Frame 501 can include additional fields 520 and 522 not present in frame 500. Additional fields 520, 522 can be fields added by switch logic 302 when copying frames of original traffic to frames of mirrored traffic. Additional fields 520 include mirror VLAN type field 414 and VLAN tag field 416, discussed above with respect to Fig. 4B. Additional fields 520 can include a divider type field 506 (shown as div. type 506). Divider type field 506 can be disposed between VLAN tag 416 for the mirror VLAN and VLAN tag 504 for a user VLAN. In some networks, network nodes can drop frames that have back-to-back VLAN tags (e.g., back-to-back VLAN tags of the same type (same EtherType) can indicate potential VLAN hopping or a VLAN masquerading attack). Thus, switch logic 302 can add divider type field 506 between the mirror and user VLAN tags. Divider type field 506 can include a type value that is not assigned to any known type or is assigned to a known type that is not in use in network 10 (e.g., an EtherType that is reserved or unassigned or an EtherType that is not in use in network 10). In some embodiments, divider type field 506 can be omitted if the network nodes support back-to-back VLAN tags. In some embodiments, the user can specify whether divider type field 506 is present or not in VLAN options 326. Additional field 522 can include metadata field 418.

Figs. 4B and 5B show one example position of metadata filed 418 in a frame. In other embodiments, metadata field 418 can be in a different position in either frame 401 or frame 501. For example, in frame 501, metadata field 418 can be disposed between VLAN tag 504 and VLAN tag 416 (e.g., before or after divider tag 506 if present).

Fig. 6 is a block diagram depicting a network 600 configured with remote port mirroring according to some embodiments. Network 600 includes network switches 14₁...14₃. Each network switch 14₁...14₃ can be implemented the same or similar to network switch 200 and can include switch logic 302 as shown in Fig. 3A. The components of network switches 14₁...14₃ are omitted from Fig. 6 for purposes of clarity. Network switch 14₁ can include a port P2. Network switch 14₂ can include ports P3 and P5. Network switch 14₃ can include ports P1, P4, and P8. A device 16₁ can be coupled to port P2. A device 16₂ can be coupled to port P3. A device 16₃ can be coupled to port P5. A device 16₄ can be coupled to port P1. A device 16₅ can be coupled to port P8. Monitor 18 can be coupled to port P4.

In the example, the user establishes remote port mirroring with multiple sources across network switches 14₁...14₃. The destination can be port P4 in network switch 14₃ to which monitor 18 is coupled. The user can create a mirror VLAN (e.g., VLAN_M) for the mirrored traffic. In network switch 14₁, the user can establish a session that specifies traffic received by port P2 as a source and the mirror VLAN as the destination. In network switch 14₃, the user can establish a first session that specifies traffic received by port P1 as a source and the port P4 as the destination. The user can establish a second session that specifies the mirror VLAN as the source and the port P4 as the destination.

In operation, device 16₁ can generate traffic 602 destined for device 16₂. Network switch 14₁ can receive traffic 602 from device 16₁ at port P2 and forward traffic 602 to network switch 14₂. Network switch 14₂ can send traffic 602 to device 16₂ through port P3. The port that couples network switches 14₁ and 14₂ is omitted for clarity. According to the session described above, port P2 can be a mirrored port. Network switch 14₁ can copy traffic 602 to generate mirrored traffic 604. Network switch 14₁ can forward mirrored traffic 604 to network switch 14₂ via the mirror VLAN. Network switch 14₂ can forward mirrored traffic 604 to network switch 14₃ via the mirror VLAN. The ports on network switches 14₁...14₃ that are assigned to the mirror VLAN are omitted for clarity. According to the session described above, network switch 14₃ can send the mirrored traffic from the mirror VLAN to monitor 18 via port P4.

Device 16₄ can generate traffic 610 destined for device 16₅. Device 16₃ can generate traffic 608 destined for device 16₄. Network switch 14₃ can receive traffic 610 from device 16₄ via port P1 and send traffic 610 to device 16₅ via port P8. Network switch 14₂ can receive traffic 608 from device 16₃ via port P5. Network switch 14₂ can forward traffic 608 to network switch 14₃ (the ports coupling network switches 14₂ and 14₃ are omitted for clarity). Network switch 14₃ can send traffic 608 to device 16₄ via port P1. According to the session described above, port P1 can be a mirrored port. Network switch 14₃ can copy traffic 608 and traffic 610 to generate mirrored traffic 606. Network switch 14₃ can send mirrored traffic 606 to monitor 18 via port P4.

In the example of Fig. 6, traffic 602 (e.g., ingress traffic from device 16₁) can be mirrored and sent to monitor 18 using remote port mirroring with metadata. The metadata can include any of the information described above, such as identity of port P2, identity of network switch 14₁, and identity of port P3. If device 16₁ and device 16₂ are coupled to a user VLAN (e.g., ports P2 and P3 are assigned to a user VLAN), then traffic 602 can be tagged with the user VLAN. The user can configure the session for remote port mirroring in network switch 14₁ to preserve the user VLAN, as discussed above in Figs. 3A-B and 5B. Thus, monitor 18 can parse the metadata in mirrored traffic 604 to determine the original source and destination ports and the identity of network switch 14₁. Monitor 18 can parse the frames in mirrored traffic 604 to identify the user VLAN of the original traffic (traffic 602).

In the example of Fig. 6, traffic 608 and 610 (e.g., ingress and egress traffic received by port P1) can be mirrored and sent to monitor 18 using local port mirroring with metadata. The metadata can include any of the information described above, such as identity of ports P1 and P5, identity of network switches 14₂ and 14₃, and identity of ports P1 and P8. Thus, monitor 18 can parse the metadata in mirrored traffic 606 to determine the original source and destination ports for traffic 608 and traffic 610, both of which have been aggregated as mirrored traffic 606. Monitor 18 can parse the metadata in mirrored traffic 606 to determine the identities of the original network switches for the traffic. Monitor can parse the metadata in mirrored traffic 606 to determine the original destination ports for the traffic.

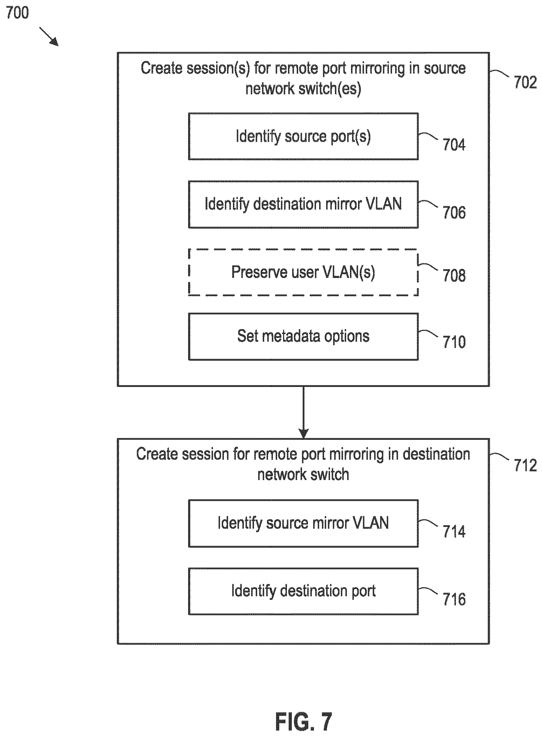

Fig. 7 is a flow diagram depicting a method 700 of configuring remote port mirroring according to some embodiments. Method 700 begins at step 702, where a user can create session(s) for remote port mirroring in source network switch(es). The user can create the session(s) through interaction with switch logic in one or more network switches. For the session(s): At step 704, the user can identify source port(s) to be mirrored. For each session, the user can identify the port(s) by their identifiers or by a user VLAN to which they are assigned. At step 706, the user can identify the mirror VLAN as the destination for each session. The user can interact with the switch logic in the network switches to establish the mirror VLAN prior to configuring the remote port mirroring. At optional step 708, the user can preserve user VLANs in one or more of the sessions. Also at step 708, if a user VLAN is preserved, the user can specify whether a divider type field is to be inserted to separate the mirror VLAN tag and the user VLAN tag. At step 710, the user can set the metadata options for the metadata embedded in the mirrored traffic. The user can select which types of metadata to include in the mirrored traffic (examples described above).

At step 712, the user can create a session for remote port mirroring in the destination network switch. The destination network switch can be separate from the source network switches or can be one of the source network switches. The user can create the session through interaction with switch logic in the destination network switch. For the session: At step 714, the user can identify the mirror VLAN as the source of the mirrored traffic. At step 716, the user can identify the destination port in the destination network switch for the mirrored traffic (e.g., the probe port).

For remote port mirroring with metadata, the user can create a single mirror VLAN for all sessions. The metadata can be used by the monitoring device to distinguish traffic from the different sessions in the aggregated mirror traffic. In remote port mirroring without metadata, the monitoring device cannot distinguish the different sessions from the aggregated mirrored traffic. While the user can create multiple mirrored VLANs, this can be cumbersome and less efficient than using remote port mirroring with metadata as described herein.

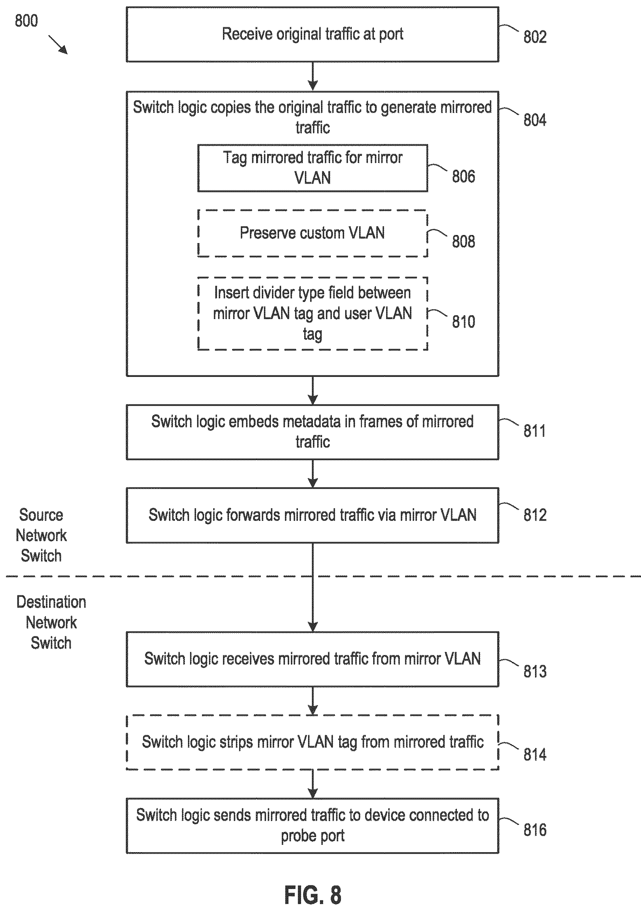

Fig. 8 is a flow diagram depicting a method 800 of remote port mirroring according to some embodiments. Method 800 begins at step 802, where a mirrored port can receive original traffic. The original traffic can be ingress traffic, egress traffic, or both. The original traffic can be tagged with a user VLAN. Alternatively, the original traffic can be native traffic (e.g., no VLAN tag). At step 804, switch logic can copy the original traffic to generate mirrored traffic according to a session established for the remote port mirroring. For the mirroring: At step 806, the switch logic can tag the mirrored traffic for the mirror VLAN. At optional step 808, the switch logic preserves a user VLAN in the original traffic (e.g., if the option is set in the session). At optional step 810, the switch logic can insert a divider type field between the mirror VLAN tag and the user VLAN tag (e.g., if the option is set in the session). At step 811, the switch logic can embed metadata in the frames of the mirrored traffic. The metadata can be constructed based on options set by the user in the session. At step 812, the switch logic can forward the mirrored traffic via the mirror VLAN. Steps 802-812 can be repeated for each set of original traffic received at the mirrored port. Steps 802-812 can be performed by switch logic in a source network switch. Steps 802-812 can be performed by multiple source network switches in the network concurrently.

Method 800 proceeds from step 812 to step 813, where switch logic receives the mirrored traffic from the mirror VLAN. At step 814, the switch logic can strip the mirror VLAN tag from the mirrored traffic (optional). At step 816, the switch logic can send the mirrored traffic to a device connected to the probe port. The probe port can be specified by a session in the switch. Steps 812-816 can be performed by switch logic in a destination network switch. Steps 812-816 can be repeated for each set of mirrored traffic.

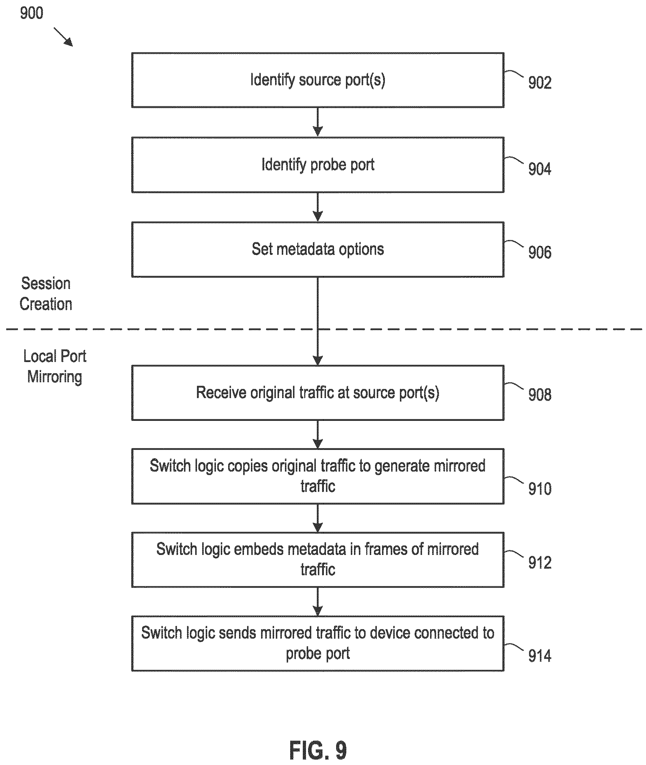

Fig. 9 is a flow diagram depicting a method 900 of local port mirroring according to some embodiments. Method 900 begins at step 902, where a user interacts with switch logic in a network switch to identify source port(s) for local port mirroring (mirrored port(s)). The source port(s) can be identified by port identifier or a user VLAN to which the port(s) are assigned. At step 904, the user interacts with the switch logic to identify a probe port (destination). At step 906, the user can set the metadata options for the metadata embedded in the mirrored traffic. The user can select which types of metadata to include in the mirrored traffic (examples described above). Steps 902-006 can be performed to create a session for local port mirroring.

At step 908, where mirrored port(s) can receive original traffic. The original traffic can be ingress traffic, egress traffic, or both. The original traffic can be tagged with user VLAN(s). Alternatively, the original traffic can be native traffic (e.g., no VLAN tag). At step 910, the switch logic can copy the original traffic to generate mirrored traffic according to a session established for the local port mirroring. At step 912, the switch logic can embed metadata in the frames of the mirrored traffic. The metadata can be constructed based on options set by the user in the session. At step 914, the switch logic can send the mirrored traffic to a device connected to the probe port. Steps 908-914 can be repeated for each set of mirrored traffic.

Embodiments of remote switch port mirroring in a network have been described. In some embodiments, a network switch can include a hardware platform, a first switch port supported by the hardware platform, and switch logic supported by the hardware platform. The first switch port can receive first network traffic for a network. The switch logic can copy the first network traffic received by the first switch port to generate mirrored traffic for a second switch port in the network, embed metadata into the mirrored traffic, and send the mirrored traffic to a device connected to the second switch port. The metadata can include information extrinsic to the first network traffic. Receiving first network traffic, copying the first network traffic, embedding metadata, and sending the mirrored traffic can be performed using signals in circuits and/or between circuits.

In the various embodiments described above, the network switch or network switches can be physical devices in a network. The techniques of remote port mirroring with metadata and local port mirroring with metadata can be applied to network switches that are defined in software (variously referred to in the art as a software-defined switch, virtual switch, or logical switch). A software-defined switch can be implemented by software executing on a computing device. In such embodiments, the hardware platform can be the computing device and the switch logic can be software executing on the computing device.

While some processes and methods having various operations have been described, one or more embodiments also relate to a device or an apparatus for performing these operations. The apparatus may be specially constructed for required purposes, or the apparatus may be a general-purpose computer selectively activated or configured by a computer program stored in the computer. Various general-purpose machines may be used with computer programs written in accordance with the teachings herein, or it may be more convenient to construct a more specialized apparatus to perform the required operations.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C ," or alternatively, "at least one of A, at least one of B, and at least one of C," it is expressly described as such.

It will be understood that, although the terms "first," "second," etc. may be used herein to describe various elements, these elements should not be limited by these terms. These terms are only used to distinguish one element from another. For example, a first element could be termed a second element, and, similarly, a second element could be termed a first element, without departing from the scope of the present disclosure.

As used herein, the term "couple" or "connect" and its derivatives include: (a) electrical and communicative coupling; and (b) do not imply a direct connection, but rather may include intervening elements, unless described as "directly coupled" or "directly connected."

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and/or steps do not imply any particular order of operation unless explicitly stated in the claims.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components in exemplary configurations may be implemented as a combined structure or component. Similarly, structures and functionalities presented as a single component may be implemented as separate components. These and other variations, additions, and improvements may fall within the scope of the appended claims.

## Claims

1. A network switch, comprising:
a hardware platform;
a first switch port, supported by the hardware platform, configured to receive first network traffic for a network; and
switch logic, supported by the hardware platform, configured to
copy the first network traffic received by the first switch port to generate mirrored traffic for a second switch port in the network, the switch logic further configured to
embed metadata into the mirrored traffic, the metadata including information extrinsic to the first network traffic, the switch logic further configured to
send the mirrored traffic to a device connected to the second switch port.

2. The network switch of claim 1, wherein
the information in the metadata includes at least one of:
a first identifier of the first switch port,
a second identifier of a third switch port in the network being a destination port for the first network traffic,
a third identifier of the network switch, and
a fourth identifier of a flow in the network switch having the first network traffic.

3. The network switch of claim 1 or 2, wherein
the first network traffic comprises first frames tagged with a first virtual local area network (VLAN) tag for a first VLAN, wherein the mirrored traffic comprises second frames being copies of the first frames including the first VLAN tag, and wherein the switch logic is further configured to tag the second frames in the mirrored traffic with a second VLAN tag for a second VLAN.

4. The network switch of claim 3, wherein
the switch logic is further configured to add a field between the first VLAN tag and the second VLAN tag in the second frames.

5. The network switch of claim 3 or 4, wherein
the switch logic is further configured to create a first session for remote port mirroring, the first session identifying the first switch port and the second VLAN, wherein another network switch includes the second switch port, and wherein the other network switch is configured with a second session for remote port mirroring, the second session identifying the second switch port and the second VLAN.

6. The network switch of any one of the claims 1 to 5, wherein
the switch logic is further configured to create a first session for port mirroring, the first session identifying a plurality of switch ports supported by the hardware platform and configured to receive the first network traffic, the plurality of switch ports including the first switch port; wherein in particular
another network switch includes the second switch port, and wherein the information in the metadata includes at least one of: a plurality of identifiers for the plurality of switch ports and an identifier of the network switch;
and/or wherein in particular
the second switch port is supported by the hardware platform, the second switch port excluded from the plurality of switch ports, and wherein the metadata includes a plurality of identifiers for the plurality of switch ports.

7. A network switch, comprising:
a hardware platform;
a first switch port supported by the hardware platform; and
switch logic, supported by the hardware platform, configured to receive mirrored traffic on a first virtual local area network (VLAN),
the mirrored traffic being a copy of first traffic received by a second switch port of another network switch,
the mirrored traffic including metadata embedded therein,
the metadata including information extrinsic to the first network traffic,
the switch logic further configured to send the mirrored traffic to a device connected to the first switch port.

8. The network switch of claim 7, wherein
the information in the metadata includes at least one of: a first identifier of the second switch port, a second identifier of a third switch port in the network being a destination port for the first network traffic, a third identifier of the other switch, and a fourth identifier of a flow in the other network switch having the first network traffic.

9. The network switch of claim 7 or 8, wherein
the first network traffic comprises first frames tagged with a second virtual local area network (VLAN) tag for a second VLAN, wherein the mirrored traffic comprises second frames being copies of the first frames including both the second VLAN tag and a first VLAN tag for the first VLAN;
wherein in particular
the second frames include a field between the first VLAN tag and the second VLAN tag.

10. The network switch of any one of the claims 7 to 9, wherein
the switch logic is further configured to create a first session for remote port mirroring, the first session identifying the first switch port and the first VLAN.

11. The network switch of any one of the claims 7 to 10, wherein
a plurality of switch ports is configured to receive the first network traffic in the other network switch, the plurality of switch ports including the second switch port, and wherein the metadata includes at least one of: a plurality of identifiers for the plurality of switch ports and an identifier of the network switch.

12. A method of port mirroring in a network switch, comprising:
receiving, at a first switch port supported by a hardware platform of the switch, first network traffic for a network;
copying, by switch logic supported by the hardware platform, the first network traffic received by the first switch port to generate mirrored traffic for a second switch port in the network;
embedding, by the switch logic, metadata into the mirrored traffic, the metadata including information extrinsic to the first network traffic; and
sending, by the switch logic, the mirrored traffic to a device connected to the second switch port.

13. The method of claim 12, wherein
the information in the metadata includes at least one of: a first identifier of the first switch port, a second identifier of a third switch port in the network being a destination port for the first network traffic, a third identifier of the network switch, and a fourth identifier of a flow in the network switch having the first network traffic;

14. The method of claim 12 or 13, wherein
the first network traffic comprises first frames tagged with a first virtual local area network, VLAN tag for a first VLAN, wherein the mirrored traffic comprises second frames being copies of the first frames including the first VLAN tag, and wherein the method further comprises tagging, by the switch logic, the second frames in the mirrored traffic with a second VLAN tag for a second VLAN;
wherein in particular the method further comprises
adding, by the switch logic, a field between the first VLAN tag and the second VLAN tag in the second frames;
and/or wherein in particular the method further comprises
creating, by the switch logic, a first session for remote port mirroring, the first session identifying the first switch port and the second VLAN;
wherein another network switch includes the second switch port, and
wherein the other network switch is configured with a second session for remote port mirroring, the second session identifying the second switch port and the second VLAN.

15. The method of any one of the claims 12 to 14, further comprising:
creating, by the switch logic, a first session for port mirroring, the first session identifying a plurality of switch ports supported by the hardware platform and configured to receive the first network traffic, the plurality of switch ports including the first switch port;
wherein the metadata includes at least one of: a plurality of identifiers for the plurality of switch ports and an identifier of the network switch.
